# EUROPEAN PATENT SPECIFICATION

(11) **EP 0 338 155 B1**
(45) Date of publication and mention of the grant of the patent: **19.01.1994**
(21) Application number: 88307196.1
(22) Date of filing: 03.08.1988
(51) Int. Cl.: G03B 21/64

(54) **Slide film arranging and storing device**
Vorrichtung zum Ordnen und Aufbewahren von Diapositiven
Dispositif pour l'arrangement et le stockage de diapositives

(30) Priority: 22.04.1988 JP 54416/88 U
(43) Date of publication of application: 25.10.1989
(73) Proprietor: SLIDEX CORPORATION, Tokyo (JP)
(72) Inventor: Ozeki, Jiro, Tokyo (JP)
(74) Representative: Fitzpatrick, Alan James

(56) References cited:
- DE-A- 2 717 205
- DE-A- 3 244 261
- DE-A- 3 413 328
- GB-A- 878 982
- JP-U- 6 135 869

## Description

This invention relates to a slide film arranging and storing device which enables previously an operator to view and inspect images of slide films stored in the device with ease and which prevents the slide films from being damaged and becoming dirty.

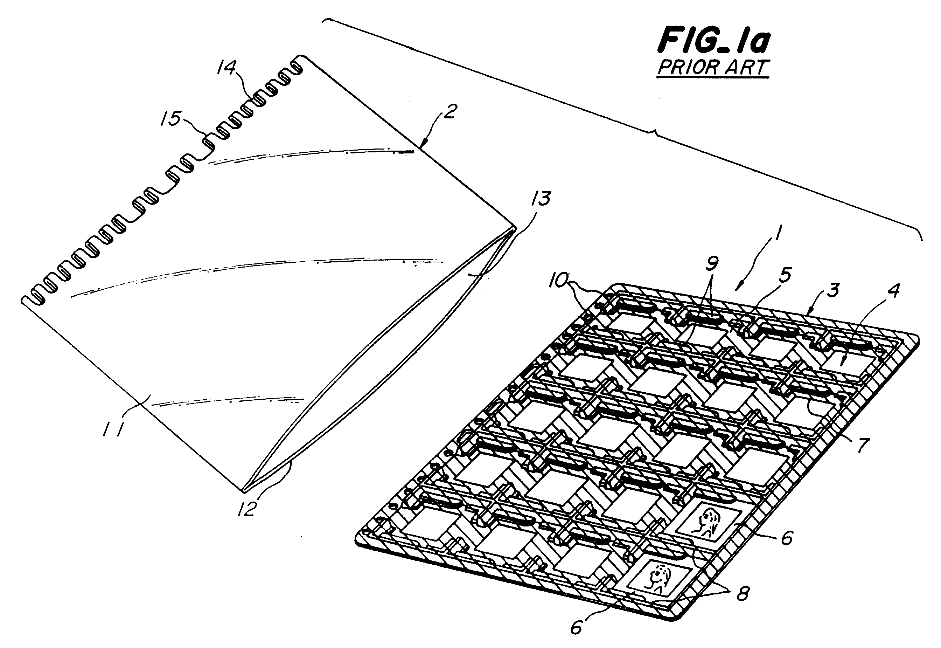

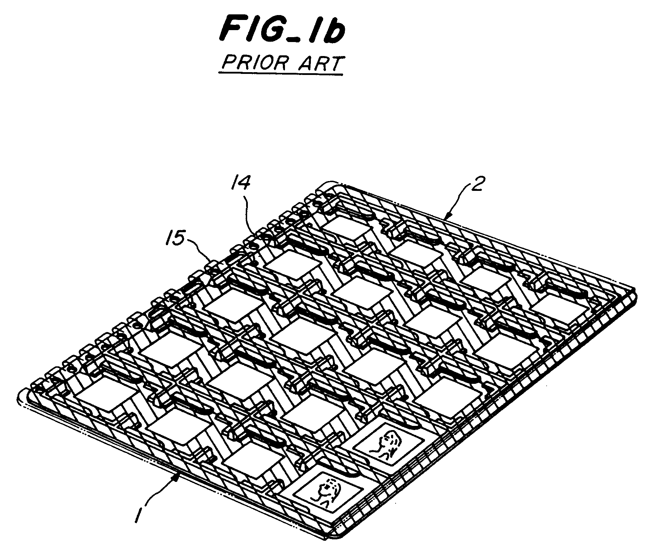

An arranging and storing device of this kind was disclosed in, for example, Japanese Utility Model Application Laid-open No. 61-35,869. As shown in Fig. 1, the disclosed arranging and storing device comprises a slide film sheet 1 and a dust cover 2 made of a light permeable or transparent plastic bag for receiving the slide file sheet 1 to cover both sides thereof. The slide file sheet 1 comprises a transparent or opaque plastic sheet 3 rectangular in a plan view, which is formed with rectangular recesses 4 regularly arranged in rows and columns for receiving slide films with slide frames. A bottom wall 5 of each of the rectangular recesses 4 is formed with a light transmission opening 7 whose size corresponds to that of a picture zone of the slide film 6. Opposed side walls 8 of each of the rectangular recesses 4 are provided with embracing pieces 9 stamped from the bottom wall 5 and extending inwardly of the rectangular recess 4. One side of the plastic sheet 3 is formed with a plurality (nineteen in this example) of binding apertures 10 for binding plastic sheets.

The dust cover 2 made of the plastic material for receiving the slide file sheet 1 preferably consists of a front surface portion made of a transparent material 11 adapted to be in opposition to a front surface of the slide file sheet 1 inserted in the cover and a rear surface portion made of an opal material 12 adapted to be in opposition to a rear surface of the slide file sheet 1. The dust cover 2 is formed in its portion corresponding to the binding apertures 10 of the plastic sheet 3 with U-shaped cut-off portions or notches 14 extending from a line substantially overlapping at least the binding apertures 10 to an edge of the plastic bag 2. The dust cover 2 is further formed with file sheet latching portions 15 circumscribing the slide file sheet 1 adjacent to the notches 14.

With such an arranging and storing device of the prior art, slide films 6 can be arranged and stored in the rectangular recesses 4 of the slide file sheet 1, while pictures of the slide films 6 can be projected under the condition they are received in the respective recesses 4.

Moreover, both surfaces of the slide films 6 can be effectively protected from being damaged or clawed and becoming dirty by covering the slide file sheet 1 arranging and storing the slide films 6 therein by the dust cover 2 as shown in Fig. 1b.

Moreover, in case of the dust cover 2 consisting of a transparent material 11 on the front side and an opal material 12 on the rear side, images of the slide films 6 arranged and stored in the slide file sheet can be previously viewed and inspected on the front side very clearly and easily by utilizing diffusion light beams passing through the opal material 12.

Furthermore, the U-shaped notches 14 formed in the plastic dust cover 2 permit latch metals to be inserted thereinto and permit the file sheet latching portions 15 of the plastic dust cover to move toward and away from each other. Therefore, even if the notches 14 and the binding apertures 10 of file sheets 1 separately formed are not precisely aligned with each other, latch pieces or metals can be inserted into the binding apertures 10 easily and securely.

On the other hand, the file sheet latching portions 15 of the plastic dust cover 2 serve to effectively prevent the file sheet 1 from removing therefrom or the plastic dust cover 2 from removing from the file sheet 1.

With such an arranging and storing device of the prior art, however, a length of the opening 13 of the cover 2 is substantially equal to a length of an edge of the file sheet 1. It is therefore difficult to insert the file sheet 1 into the plastic dust cover 2.

The slide file sheet 1 may be made of a light permeable or transparent plastic sheet. More particularly the slide file sheet 1 may be made of a light permeable plastic sheet without providing light transmission openings 7 in order to more effectively protecting emulsion surfaces of slide films, to reduce steps of forming processes of the slide file sheets and to enable projections of pictures of the slide films 6 held in the slide file sheet 1 without removal of the films therefrom. In such cases, there is a problem that intense light beams passing through a dust cover and the slide file sheet about the slide films with slide frames would greatly make difficult the previous viewing and inspection of the slide films retained in the slide file sheet.

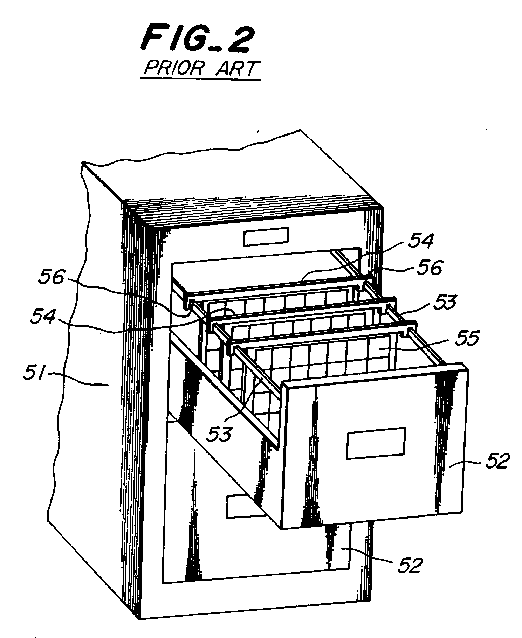

Devices for storing the file sheets of this kind have been disclosed, for example, in Japanese Utility Model Application Publications Nos. 57-10,863 and 57-18,149. With such a device as shown in Fig. 2, a file sheet 55 made of a hard sheet is provided along one edge with a plurality of protrusions (not shown) adapted to elastically engage a hanging bar 54 having a groove of a C-shaped cross-section, and the hanging bar 54 is provided at ends with notches 56 adapted to engage hanger rails 53 fixed to a drawer 52 of a cabinet 51. A number of file sheets 55 integral with hanging bars 54 are supported in suspension in the cabinet 51 in this manner.

In this case, however, when the file sheets are taken out of or returned into the cabinet or when the file sheets in the cabinet are handled for the purpose of looking for desired file sheets, surfaces or emulsion surfaces of the slide films could not be prevented from being clawed or contaminated by side walls or embracing pieces of the file sheets or fingers of an operator or other foreign members. Moreover, the slide films received in the file sheets stored in the cabinet could not be prevented from being contaminated by dust which would cling or stick to the slide films.

It is a primary object of the invention to provide a slide film arranging and storing device which eliminates all the disadvantages of the prior art and is capable of sufficiently protecting a file sheet and very easily inserting the file sheet into a plastic cover and exactly positioning the file sheet in the plastic cover.

It is another object of the invention to provide a slide film arranging and storing device capable of sufficiently effectively protecting both surfaces of slide films stored therein when the device is hanged in a cabinet.

It is a further object of the invention to provide a slide film arranging and storing device capable of preventing excess light beams through a plastic cover to make very easy previous viewing and inspection of images of slide films by exposing to light beams.

In order to achieve these objects, in a slide film arranging and storing device including a rectangular file sheet formed with a plurality of film storing recesses regularly arranged, and a bag-like plastic cover consisting of a front surface member covering a front surface of said file sheet and a rear surface member covering a rear surface of said file sheet, said front and rear surface members forming a file sheet inserting opening at one side edge of said bag-like plastic cover, according to the invention the plastic cover has a width at the file sheet inserting opening somewhat wider than the length of either the long or the short side of said file sheet but substantially equal to said length at the side edge opposite said file sheet inserting opening.

With the arrangement of the slide film arranging and storing device according to the invention, the insertion of the file sheet into the plastic cover can be very easily carried out with the sufficient size of the file sheet inserting opening. On the other hand, the file sheet can be positioned with a great certainty when it has been inserted into the plastic cover, because the width of the cover is substantially equal to the size of the file sheet at the inserted terminal position.

In another aspect, according to the invention at least one of the front and rear surface members of the plastic cover is provided with a hanging bar passing-through portion in the form of a sleeve in the proximity of the file sheet inserting opening.

With this arrangement, the file sheet and the plastic cover can be simply hanged in a cabinet by a hanging bar inserted into the passing-through portion of the cover without requiring any elastic engaging means.

In a further aspect, according to the invention at least one of the front and rear surface members of the plastic cover is formed with a shield grid whose stripes have widths bigger than distances between slide films with slide frames stored in the file sheet but smaller than distances between image zones of the slide films.

With this arrangement, an operator can easily and rapidly view and inspect clear images of the slide films stored in the device, because of the shield grid completely shutting off excess light transmission through spaces between the slide films with slide frames.

In order that the invention may be made clearly understood, preferred embodiments will be described, by way of example, with reference to the accompanying drawings.
Fig. 1a is a perspective view illustrating a slide file sheet and its plastic cover of the prior art;
Fig. 1b is a perspective view the slide file sheet covered by the plastic cover shown in Fig. 1a;
Fig. 2 is a perspective view illustrating file sheets and covers of the prior art hanged in a cabinet;
Fig. 3a is a perspective view of one embodiment of a device according to the invention;
Fig. 3b is a perspective view of the device shown in Fig. 3a wherein a slide sheet has been inserted in a plastic cover;
Figs. 4a and 4b illustrate modifications of plastic covers of the device according to the invention;
Fig. 5 is a perspective view illustrating another embodiment of the device according to the invention;
Fig. 6 is a plan view of a file sheet into which a hanging bar has extended according to the invention;
Fig. 7 is a plan view illustrating a plastic cover according to the invention, which is formed with apertures overlapping binding apertures of a file sheet;
Fig. 8a is a sectional view taken along a line VIIIa-VIIIa in Fig. 7;
Figs. 8b and 8c are sectional views illustrating modifications of positions of hanging bar passing-through portions;
Figs. 9a and 9b are plan views illustrating modifications of hanging bar passing-through portions of the plastic cover;
Fig. 10 is a perspective view illustrating a storing condition of the device in a cabinet according to the invention;
Fig. 11 is a plan view illustrating a plastic cover having a shield grid of the device according to the invention;
Fig. 12 is a perspective view illustrating a modification of the plastic cover shown in Fig. 11; and
Figs. 13a and 13b are perspective views illustrating the device shown in Fig. 12 having a hanging bar and storing slide films.

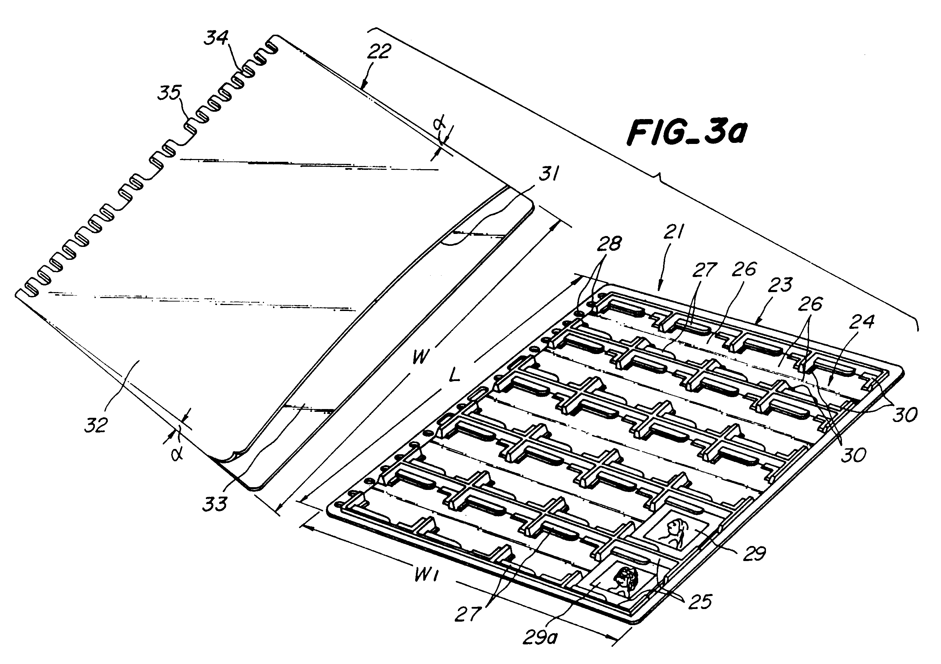

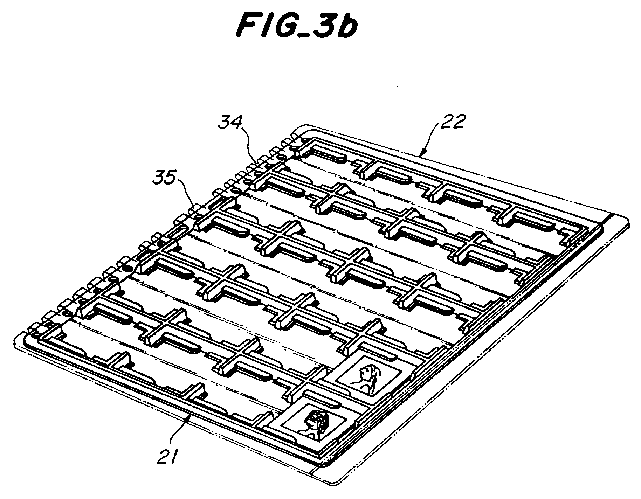

Figs. 3a and 3b perspectively illustrate one embodiment of the invention comprising a file sheet 21 and a plastic cover 22.

The file sheet 21 consists of a rectangular transparent plastic sheet or an opal or opaque white or translucent white plastic sheet 23 formed with a plurality of rectangular recesses 24 regularly arranged in rows and columns for receiving slide films with slide frames. Opposed side walls 25 of each of the rectangular recesses 24 are provided with embracing pieces 27 stamped from a bottom 26 and extending inwardly of the rectangular recess 24. One side of the plastic sheet 23 is formed with nineteen binding apertures 28.

In this embodiment, the embracing pieces 27 are provided on the opposed side walls 25 and extending therealong. One end of each of the embracing pieces 27 merges into one end wall of the rectangular recess 24 and the other end of the embracing piece 27 extends somewhat beyond at a mid portion of the side wall 25.

In the event that the file sheet 21 is particularly made of an opal plastic sheet in this embodiment, it is preferable to provide pillows at four corners of each of the rectangular recesses 24 in order to support the slide film 29 slightly above the bottom 26. In this manner, it becomes possible to project a particularly clear image on a screen by out-focusing the bottom wall of the recess when a picture of a slide film 29 received in the rectangular recess of the file sheet 21 is projected, for example, by means of an overhead type projector.

The file sheet 21 may be formed by an opaque plastic sheet. In this case, a bottom wall of each of the rectangular recess is formed with a light transmission opening whose size corresponds to that of a picture area of the slide film 29 as in the prior art so that the picture of the slide film 29 received in the file sheet can be projected on a screen as it is stored in the file sheet.

On the other hand, the plastic cover 22 is in most cases made of two plastic films whose three edges are sealed to form a file sheet inserting opening 31 at the remaining edge. The plastic cover 22 has a size sufficient to receive the entire file sheet 21 substantially completely as shown in Fig. 3b when the file sheet 21 is inserted into the plastic cover 22 through the opening 31.

The plastic film 32 of the plastic cover 22 in opposition to a recessed surface of the file sheet 21 is preferably a transparent plastic material, while the other plastic film 33 in opposition to a back surface of the file sheet 21 is preferably an opal plastic material. These plastic films 32 and 33 serve to protect the slide films 29 received in the rectangular recesses 24 from being damaged or clawed or contaminated effectively, while the plastic film 33 made of the opal plastic material diffuses light beams passing through the file sheet 21 from the back to the recessed surface thereof and the plastic film 32 made of the transparent plastic material makes it possible to previously view and inspect pictures of the films utilizing the diffused light beams.

Moreover, both the two plastic films 32 and 33 of the plastic cover 22 may be formed by transparent materials. With such a transparent plastic cover, the sufficient protection of the slide films can be of course accomplished. If the plastic sheet 23 of the file sheet is made of an opal plastic material in this case, the pictures of the slide films can be sufficiently previously viewed and inspected with the aid of diffusion of light beams at the plastic sheet 23.

The plastic cover 22 is formed with U-shaped cut-off portions or notches 34 in a portion corresponding to the binding apertures 28 of the file sheet 21 and extending from a line substantially overlapping at least the binding apertures 28 to an edge of the plastic cover 22. The plastic cover 22 is further formed with file sheet latching portions 35 circumscribing the slide file sheet 21 adjacent to the notches 34. The notches 34 make it possible to insert jaws of anchoring metals (not shown) securely into the binding apertures 28 when file sheets 21 covered by the plastic cover 22 are bound by the anchoring as a thick book. The formation of the notches 34 in the plastic cover 22 is, in general, effected separately from the formation of the binding apertures 28 so that the notches 34 may be formed slightly shifted relatively to the binding apertures 28 due to possible forming errors of the notches 34 and apertures 28. However, the relative positional error of the notches and apertures will be compensated by the fact that the notches 34 extend to the edge of the plastic cover 22 and the file sheet latching portions 35 are able to deform very easily toward and away from each other. In other words, even if there are relative positional errors between the binding apertures 28 and the notches 34, the jaws of the anchoring metals will be forced into the binding apertures 28 pushing away the file sheet latching portions 35 overlapping the binding apertures 28, so that file sheet latching portions 35 do not interfere with the binding of the file sheets 21.

After the file sheets 21 have been bound, the file sheet latching portions 35 circumscribe the periphery of the file sheet 21 to prevent the plastic cover 22 from removing from the file sheet 21 as if the latching portions 35 were a bottom of the plastic cover 22. Moreover, edges of the notches contact the jaws of the anchoring metals to prevent the plastic cover 22 from removing from the file sheet 21 in reverse directions, so that the plastic cover does not remove from the anchoring metals separately from the file sheet 21. Therefore, the slide films accommodated in the file sheets 21 are always securely protected with great certainty.

In addition thereto, in this embodiment, both side edges of the plastic cover 22 extend from the side edge formed with the notches 34 and latching portions 35 to the side edge provided with the file sheet inserting opening 31 and extend obliquely outwardly at slight angles α relative to lines perpendicular to the side edges provided with the notches 34 and the inserting opening 31. The plastic cover is substantially trapezoid as a whole so that a width W of the file sheet inserting opening 31 is somewhat more than length or width (length L in this case) of the file sheet 21, while a width of the plastic cover 22 at a terminal position of the file sheet 21 inserted in the cover 22 is substantially equal to a length of the file sheet 21.

With this arrangement, the insertion of the file sheet 21 into the plastic cover 22 can be very easily effected with the aid of the sufficient spare in the size of the file sheet inserting opening. Moreover, when the file sheet 21 has arrived at the inserted terminal position in the plastic cover 22, the file sheet 21 can be exactly positioned as shown in Fig. 3b owing to the selected width of the cover 22 at the terminal position.

In order to enable to turn up at least one corner of one plastic film, for example, the transparent plastic material 32 at the inserting opening 31 as shown in Fig. 3a, the transparent plastic material 32 and the opal plastic material 33 may be not welded to each other only a certain distance at the inserting opening. The file sheet 21 is thus easily inserted into the inserting opening 31 in this manner. In this case, moreover, it is preferable to extend slightly the side edge of the opal material 33 at the opening 31 beyond the side edge of the transparent material 32 toward the file sheet as shown in Fig. 3a, for the purpose of making it easier to turn up the corner of the transparent material 32.

Although the embodiment of the invention has been explained by referring to the drawing, various modifications may be allowed so long as the desired width of the inserting opening is maintained. For example, only one side edge of the plastic cover 22 may be made oblique outwardly. Moreover, the width of the inserting opening of the plastic cover may be determined slightly larger than a width W₁ or a length of a shorter side of the file sheet 21. In this case, side edges of the cover corresponding to longer sides of the plastic sheet are oblique outwardly and one of side edges corresponding to shorter sides has a length substantially equal to the width W₁ of the file sheet 21.

Although the side edges of the plastic cover are straight oblique outwardly in Fig. 3a, they may be curved in any directions.

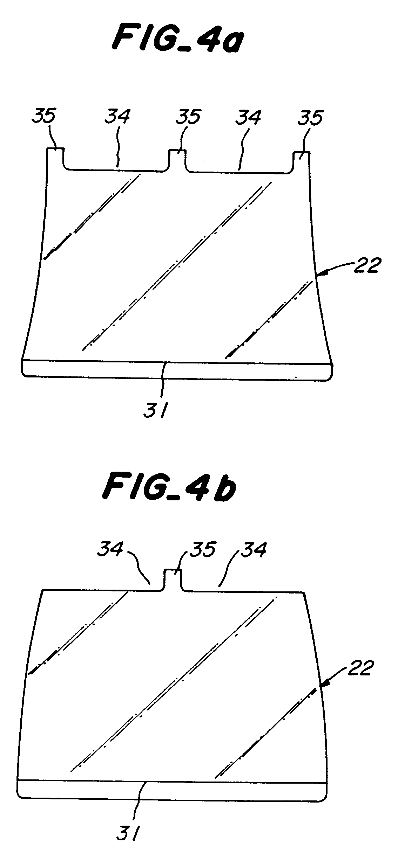

Fig. 4a illustrates in a plan view another embodiment of the invention, wherein a plastic cover 22 is provided with file sheet latching portions 35 at ends and a mid portion along one side edge of the cover and notches 34 between the latching portions 35. The latching portion 35 at the mid portion may be dispensed with so that there are two latching portions and one notch therebetween. In a further embodiment shown in Fig. 4b, there are provided one latching portion 35 and notches 34 extending along an entire side edge except the latching portion 35.

With the embodiments shown in Figs. 4a and 4b, the notches 34 are formed greatly in excess of the overlapping portion of the plastic cover 22 and the binding apertures 28. Therefore, even if there are some errors in relative positions between the binding apertures 28 and the notches 34, the insertion of jaws of anchoring metals into the binding apertures 28 is very easily effected, while an accidental removal of the plastic cover 22 from the file sheet 21 can be securely prevented with the aid of the at least one file sheet latching portion 35 and edges of the notches.

With the slide film arranging and storing device as constructed as above described, the slide films 29 with frames received in the rectangular recesses 24 of the file sheet 21 as shown in Fig. 3a are embraced in this embodiment by the pillows 30 and the embracing pieces 27 so that the slide frames are spaced upwardly from the bottom walls 26 of the recesses. Therefore, even if there are provided the light transmission openings in the bottom walls 26 of the file sheet 21 corresponding to pictures of the films, the back surfaces of the films are effectively protected from foreign substances on the back side of the file sheet.

Moreover, the plastic cover 22 covering the file sheet 21 directly protects both surfaces of the slide films 29 from being damaged or clawed and contaminated by the transparent material 32 and the opal material 33, while the opal material 33 serves to make easy the previous viewing and inspection with the aid of diffuse rays which have transmitted the opal material. Moreover, the notches 34 of the plastic cover 22 make easy the insertion of jaws of anchoring metals into binding apertures 28 by the action of the notches 34, themselves or in conjunction with deformations of the latching portions 35. Further, the latching portions 35 serve to prevent the file sheet 21 from inadvertently removing from the plastic cover 22.

In this embodiment, the width of the inserting opening 31 is somewhat larger than the size of the file sheet 21, while the width of the plastic cover 22 at the terminal position of the file sheet inserted in the cover is substantially equal to the size of the file sheet 21. In this manner, the file sheet 21 can be very easily inserted into the plastic cover 22 and be exactly positioned at the inserted terminal position thereof.

Although the embodiments have been explained by referring to the drawings, binding apertures of the file sheets may be formed along the side edge other than that formed with the apertures shown in the drawings. The notches and the latching portions may be formed along either of the side edges adjacent to the side edge having the inserting opening.

Moreover, the file sheet may be formed from a lamination of cardboards or plastic plates or combination of cardboards and plastic plates. Positions, configurations, materials and the like of the embracing pieces may be changed so long as the embracing pieces are able to exhibit the inherent function. Moreover, the embracing pieces may be omitted so long as positions of the slide films stored in the file sheets can be ascertained by the plastic cover.

According to the invention, a plurality of slide films stored in the rectangular recesses can be directly and very effectively protected by the plastic cover. Moreover, the plastic sheets can be very easily inserted into the plastic covers and can be exactly positioned in the plastic covers in their respective inserted terminal positions. The respective file sheets inserted in the plastic covers can be simply bound as a thick book.

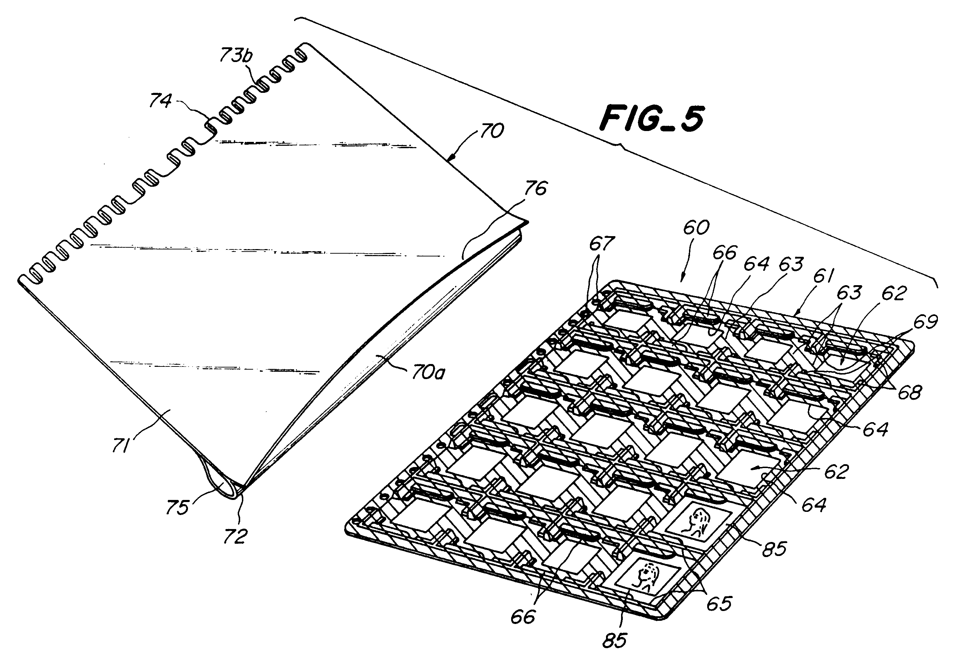

Fig. 5 illustrates a further embodiment of the invention including a file sheet 60 and a plastic cover 70. A construction of the file sheet 60 is substantially similar to those shown in Figs. 1a and 3a so that the file sheet 60 will not be described in further detail.

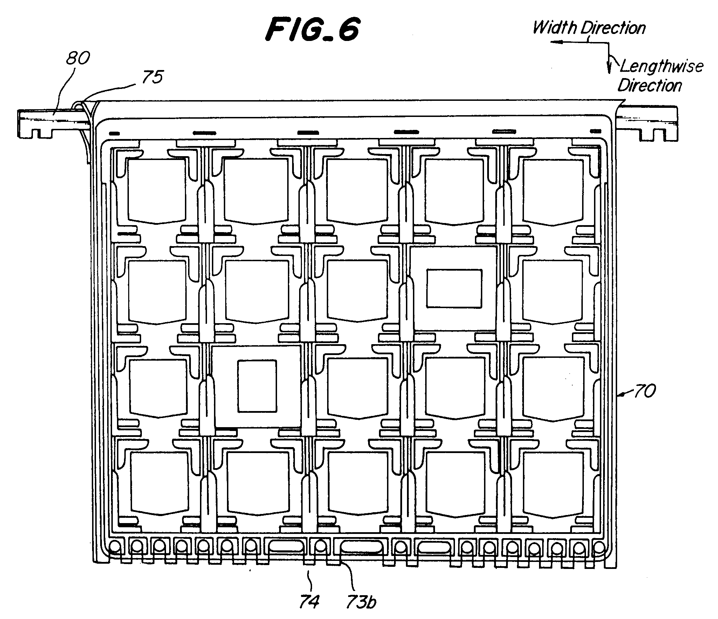

In this embodiment, the plastic cover 70 consists of a front surface member 71 and a rear surface member 72. At least one of the surface members 71 and 72 extends longer than a length of the file sheet 60, and the longer part of the surface member is doubled or folded downwardly and outwardly. The folded end is heat-sealed to form a sleeve or a hanging bar passing-through portion 75. In this embodiment, the hanging bar passing-through portion 75 is formed only on the rear surface member 72. It is preferable to determine the position of the hanging bar passing-through portion 75 relative to the rear surface member 72 such that the passing-through portion 75 is above the uppermost image zones of the file sheet 60 when the file sheet 60 is accommodated in the plastic cover 70 (Fig. 6) in the event that the plastic cover 70 is formed of transparent or light permeable materials. In this manner, the passing-through portion 75 and the heat-sealed portion do not overlap the image zones of slide films embraced in the file sheet 60 to enable an operator to view images of the slide films clearly.

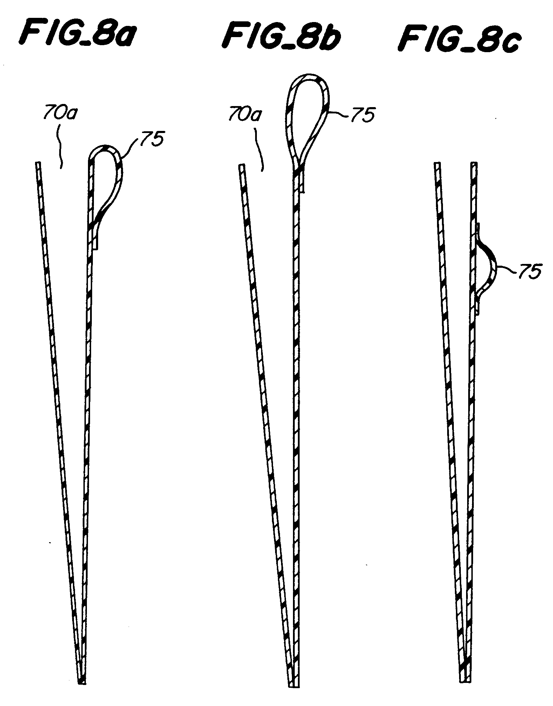

The passing-through portion 75 may be made in various manners. For example, a surface member may be folded outwardly and downwardly out of an opening 70a and heat-sealed shown in Fig. 8a. As shown in Fig. 8a, the passing-through portion 75 is located outwardly of the plastic cover but not higher than the inserting opening 70a in the shown vertical position of the cover. A surface member extends upwardly of the opening 70a and is then folded outwardly and heat-sealed as shown in Fig. 8b. In this case, the passing-through portion 75 is located outwardly of the plastic cover but higher than the inserting opening 70a in the vertical position of the cover. A separate plastic sheet is heat-sealed with its ends to a rear surface member 72 at a location near an opening 70a.

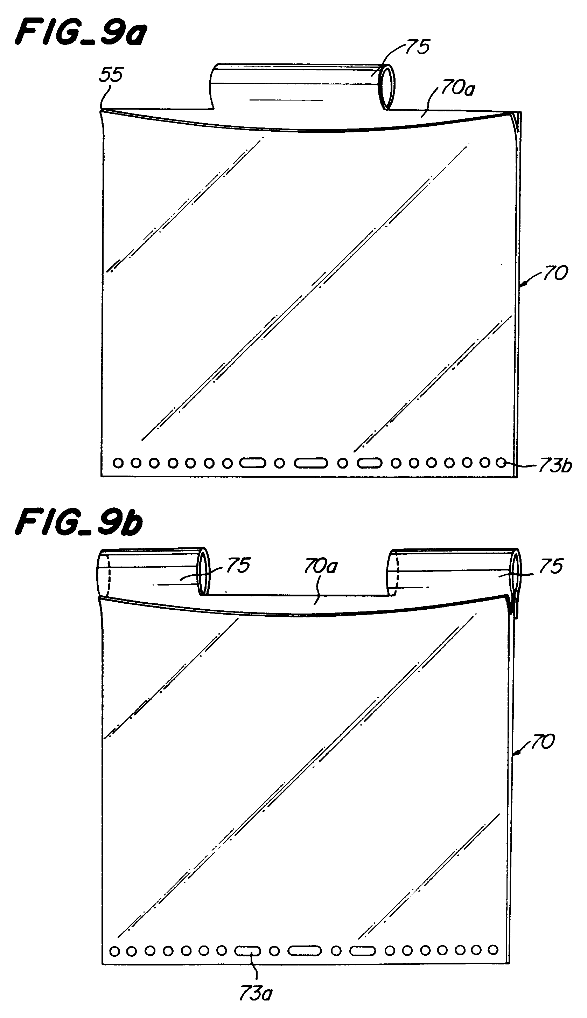

In case that the plastic cover 70 is formed of an opaque material, the passing-through portion 75 may be positioned below the opening 70a overlapping the image zones of the slide films as shown in Fig. 8c because it is inherently unnecessary to view images of slide films stored in the file sheet. From other viewpoints, the passing-through portion 75 may be located relative to the cover 70 dependently upon depths of cabinets. Moreover, the passing-through portion 75 is not necessarily extended throughout the entire width of the plastic cover. The plastic cover may be provided with a passing-through portion 75 at its center (Fig. 9a) or two passing-through portions at both ends (Fig. 9b). In other words, it is only required for the passing-through portion to have a length sufficient to support the file sheet and the plastic cover. Although the passing-through portion has been provided on the rear surface member 72 of the plastic cover 70 in the embodiments shown in the drawings, it may be provided on the front surface member 71 in the same manner as above described.

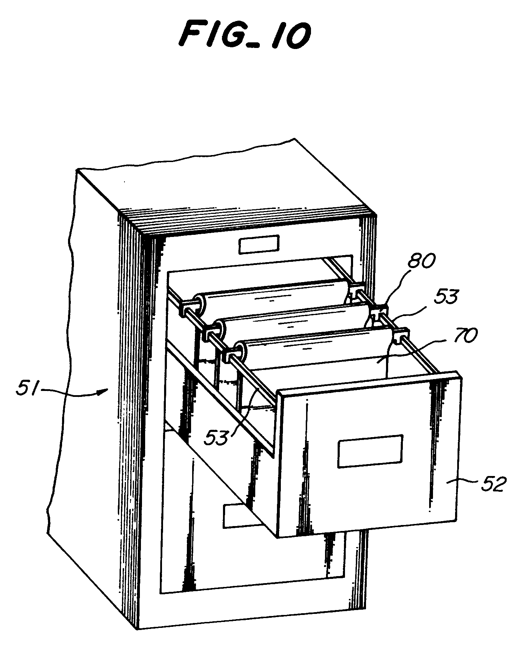

As shown in Fig. 10, the plastic cover 70 can be hanged on rails 53 and side walls of a cabinet 51 by a hanging bar 80 simply constructed of a hard plastic material and extending through the hanging bar passing-through portion 75 as above described as shown in Fig. 6. In this embodiment, moreover, a flange portion 76 is provided on the front surface member 71 for effectively guiding the file sheet being introduced into the plastic cover 70.

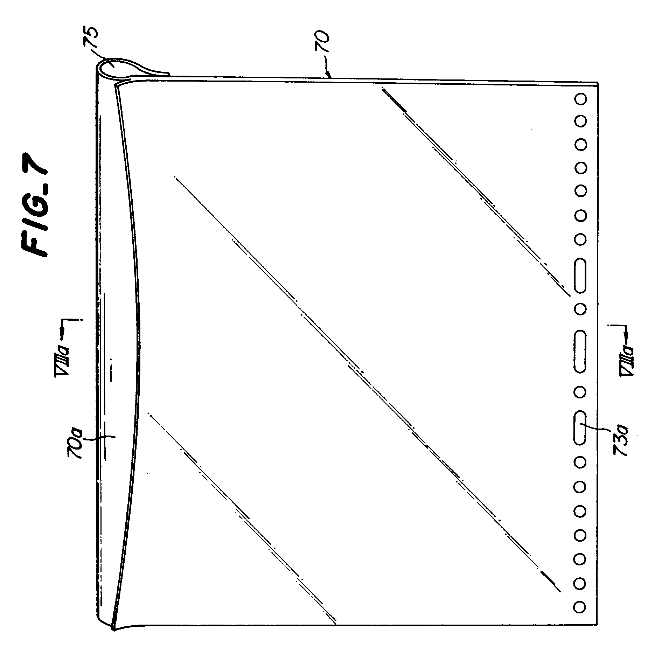

Moreover, the plastic cover 70 is formed with apertures as large as binding apertures 67 of the file sheet 60 or elongated apertures 73a (Fig. 7) in a portion of the plastic cover 70 at least substantially overlapping the binding apertures 67 of the file sheet 60.

As above described, the plastic cover 70 can be hanged in a cabinet so that the file sheet is stored in a vertical position. Therefore, the slide films stored in the file sheet and the plastic cover can be more effectively prevented from being contaminated by dust.

The plastic cover 70 is applicable to both cases of hanging plastic covers in a cabinet and binding file sheets and covers as a thick book. If the plastic cover and file sheet are used only by hanging them in a cabinet, the apertures 73a or the notches 73b may be dispensed with.

According to the embodiment whose plastic cover has the sleeve or hanging bar passing-through portion, the plastic cover enclosing the file sheet can be easily hanged without any risk of their falling off.

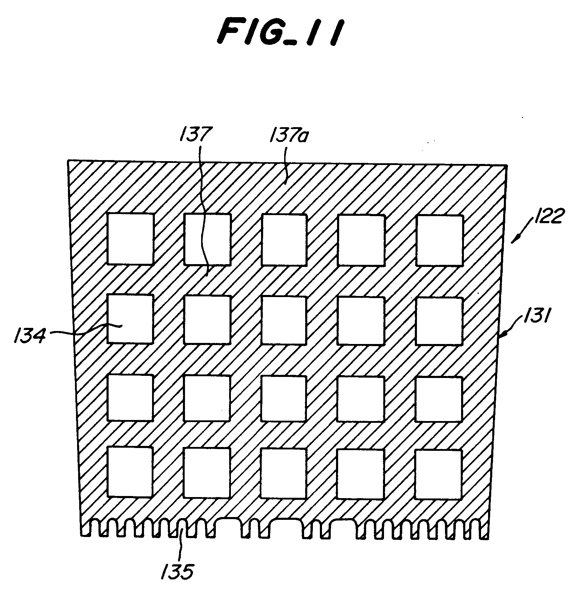

Referring back to Fig. 1a, as we mentioned in the preamble of the specification, intense light beams passing through the plastic cover and the file sheet about the slide films with slide frames may make difficult the viewing and inspection of the slide films stored in the file sheet, in the event that the file sheet is transparent. In order to eliminate this problem, according to a further embodiment of the invention a shield grid 137 is formed on a rear surface member 134 of the plastic cover by printing or painting an opaque ink, paint or the like as shown in Fig. 11.

The shield grid 137 is positioned on the plastic cover so as not overlap any image zones 29a (Fig. 3) of the slide films with slide frames received in the file sheet covered by the plastic cover. Widths of stripes of the shield grid 137 are more than distances between a plurality of slide films with slide frames received in the file sheet but less than distances between the image zones 29a of the slide films 29.

In this case, it is preferable to form a frame-shaped shield portion 137a in peripheral portions of the plastic cover 131 so as not overlap the image zones 29a of the slide films 29 as shown in Fig. 11.

With the plastic cover constructed as above described in this embodiment, the file sheet 21 together with the plastic cover is exposed to light beams in order to view the images of the slide films stored in the file sheet, the excess light transmission through the slide sheet and the cover is completely shut off by the action of the shield grid 137 and preferably with the aid of the frame-shaped shield portion 137a. Only the light beams passing through the image zones of the slide films arrive into eyes of an operator so that the operator can easily and rapidly view and inspect clear images of the films.

In this case, the plastic cover 131 may be so formed that opposed side edges are oblique outwardly from the side edge formed with the notches 135 toward the side edge opposite thereto as in the embodiment shown in Fig. 3a.

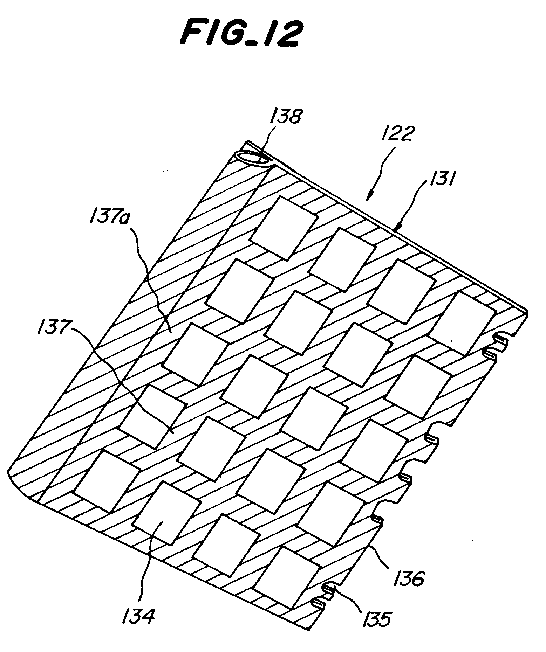

Fig. 12 illustrates another embodiment of the invention in which the embodiment shown in Fig. 5 is applied to the plastic cover shown in Fig. 11. This plastic cover is formed with five binding apertures 135. A hanging bar 80 passing through a hanging bar passing through portion 138 is engaged with protrusions provided on an illuminator box (not shown) so that an operator can easily view and inspect images of slide films by the action of shield grid 137 and the illuminator box.

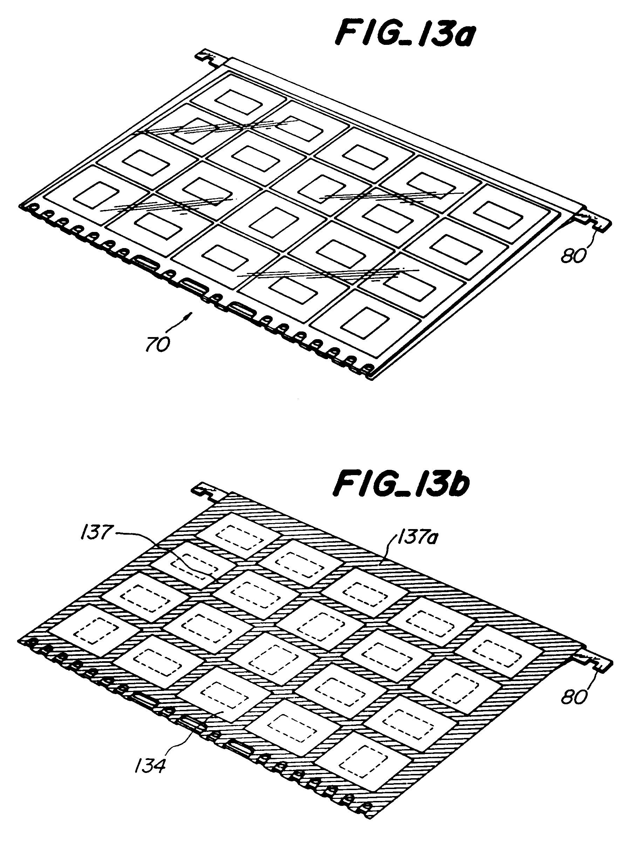

Figs. 13a and 13b perspectively illustrating the plastic cover 70 with the shield grid 137. A hanging bar 80 extends through the passing-through portion of the plastic cover. Twenty slide films with slide frames are stored in the file sheet enclosed by the plastic cover.

According to the plastic cover with the shield grid, the excess light transmission is completely shut off by the shield grid 137 and the frame-shaped shield portion 137a so that the operator can easily and rapidly view and inspect clear images of the films.

## Claims

1. A slide film arranging and storing device including a rectangular file sheet (21, 60) formed with a plurality of film storing recesses (24, 62) regularly arranged, and a bag-like plastic cover (22, 70, 131) consisting of a front surface member (32, 71) covering a front surface of said file sheet and a rear surface member (33, 72) covering a rear surface of said file sheet, said front and rear surface members forming a file sheet inserting opening (31, 70a) at one side edge of said bag-like plastic cover, characterised in that the plastic cover has a width (W) at the file sheet inserting opening somewhat wider than the length of either the long (L) or the short (W₁) side of said file sheet but substantially equal to said length at the side edge opposite said file sheet inserting opening.

2. A device as set forth in claim 1, wherein said file sheet is formed with a plurality of binding apertures (28, 67) along one side edge of the sheet, and said plastic cover is formed with notches (34, 73b) in its side edge corresponding to the side edge formed with the binding apertures of the file sheet and which notches extend from a line substantially overlapping at least said binding apertures to an edge of the plastic cover, and with file sheet latching portions (35, 74) circumscribing the file sheet and connected to the plastic cover at least one portion of them.

3. A device as set forth in claim 1, wherein opposed side edges of said plastic cover other than the opposed side edges one of which is formed with the file sheet inserting opening are substantially straight but oblique (α) outwardly toward the side edge formed with the inserting opening.

4. A device as set forth in claim 1, wherein opposed side edges of said plastic cover other than the opposed side edges one of which is formed with the file sheet inserting opening are curved inwardly.

5. A device as set forth in claim 1, wherein opposed side edges of said plastic cover other than the opposed side edges one of which is formed with the file sheet inserting opening are curved outwardly.

6. A device as set forth in claim 1, wherein a side edge of the rear surface member of the plastic cover extends slightly beyond a side edge of the front surface member at the file sheet inserting opening.

7. A device as set forth in claim 1, wherein the front and rear surface members of the plastic cover are not welded to each other only a certain distance along at least one side edge adjacent to the file sheet inserting opening.

8. A device as set forth in claim 1, wherein at least one of said front surface and rear surface members of the plastic cover is provided with a hanging bar passing-through portion (75, 138) in the form of a sleeve in the proximity of said file sheet inserting opening.

9. A device as set forth in claim 8, wherein the side edge of one of the front and rear surface members of the plastic cover at the file sheet inserting opening extends beyond the side edge of the other surface member and the extended side edge is doubled outwardly and downwardly out of the file sheet inserting opening and sealed to said one of the front and rear surface members to form the hanging bar passing-through portion.

10. A device as set forth in claim 9, wherein said hanging bar passing-through portion is arranged outwardly of the plastic cover but not extended upwardly of the file sheet inserting opening in a vertical position of the plastic cover with the file sheet inserting opening directing upwardly.

11. A device as set forth in claim 9, wherein said hanging bar passing-through portion is arranged outwardly of the plastic cover but extended upwardly of the file sheet inserting opening in a vertical position of the plastic cover with the file sheet inserting opening directing upwardly.

12. A device as set forth in claim 8, wherein a separate plastic sheet is attached with its ends to one of the surface members of the plastic cover near the inserting opening to form the hanging bar passing-through portion.

13. A device as set forth in claim 8, wherein said hanging bar passing-through portion is provided only at a center of the one side edge of the plastic cover provided with the file sheet inserting opening.

14. A device as set forth in claim 8, wherein said hanging bar passing-through portion is provided at each end of the one side edge of the plastic cover provided with the file sheet inserting opening.

15. A device as set forth in claim 1, wherein at least one of the front and rear surface members of the plastic cover is formed with a shield grid (137) whose stripes have widths larger than distances between slide films (29) with slide frames stored in the file sheet but smaller than distances between image zones (29a) of the slide films.

16. A device as set forth in claim 15, wherein a frame-shaped shield portion (137a) is provided in peripheral portions of the plastic cover.

## Patentansprüche

1. Vorrichtung zum Ordnen und Aufbewahren von Diapositiven, umfassend:
- eine rechteckige Registerplatte (21, 60), die mit einer Vielzahl von Dia-Aufbewahrungsvertiefungen (24, 62) in regelmäßiger Anordnung versehen ist, und
- eine beutelartige Kunststoff-Hülle (22, 70, 131), bestehend aus einem Frontseitenteil (32, 71), das eine Frontseite der Registerplatte abdeckt, und aus einem Rückseitenteil (33, 72), das eine Rückseite der Registerplatte abdeckt, wobei vorgenanntes Frontseiten- und Rückseitenteil eine Einschuböffnung (31, 70a) für die Registerplatte an einer Kante der beutelartigen Kunststoff-Hülle bilden,
dadurch gekennzeichnet, daß die Kunststoff-Hülle im Bereich der Einschuböffnung für die Registerplatte eine Breite (W) besitzt, die etwas breiter ist sowohl als die Länge (L) der langen als auch Länge (W₁) der kürzeren Seite der Registerplatte, jedoch im wesentlichen gleich der genannten Länge der Registerplatte an der Seitenkante, die gegenüber der Einschuböffnung für die Registerplatte liegt.

2. Vorrichtung nach Anspruch 1, dadurch gekennzeichnet, daß die Registerplatte mit einer Vielzahl von Bindeöffnungen (28, 67) entlang einer Seitenkante der Platte versehen ist, und daß die vorgenannte Kunststoff-Hülle mit Einkerbungen (34, 73b) an ihrer Seitenkante, die mit der mit den Bindeöffnungen versehenen Seitenkante der Registerplatte korrespondiert, versehen ist, und daß die Einkerbungen sich von einer Linie aus erstrecken, die wenigstens die genannten Bindeöffnungen bis zu einer Kante der Plastikhülle überlappt, und daß Registerplatten-Laschen (35, 74) vorhanden sind, die die Registerplatte umgreifen und von denen wenigstens ein Teil mit der Kunststoff-Hülle verbunden ist.

3. Vorrichtung nach Anspruch 1, dadurch gekennzeichnet, daß gegenüberliegende Kanten der Kunststoff-Hülle, mit Ausnahme der gegenüberliegenden Kanten, von denen eine mit der Registerplatten-Einstecköffnung versehen ist, im wesentlichen gerade sind, aber nach außen zu der Seitenkante, die mit der Einstecköffnung versehen ist, schräg liegen (α).

4. Vorrichtung nach Anspruch 1, dadurch gekennzeichnet, daß gegenüberliegende Kanten der Kunststoff-Hülle, mit Ausnahme der gegenüberliegenden Kanten, von denen eine mit der Registerplatten-Einstecköffnung versehen ist, nach innen gebogen sind.

5. Vorrichtung nach Anspruch 1, dadurch gekennzeichnet, daß gegenüberliegende Kanten der Kunststoff-Hülle, mit Ausnahme der gegenüberliegenden Kanten, von denen eine mit der Registerplatten-Einstecköffnung versehen ist, nach außen gebogen sind.

6. Vorrichtung nach Anspruch 1, dadurch gekennzeichnet, daß eine Seitenkante des Rückseitenteils der Kunststoff-Hülle etwas über die Seitenkante des Frontseitenteils im Bereich der Öffnung für die Registerplatte übersteht.

7. Vorrichtung nach Anspruch 1, dadurch gekennzeichnet, daß das Frontseiten- und das Rückseitenteil der Kunststoff-Hülle außer entlang einer gewissen Strecke an wenigstens einer Seitenkante im Bereich der Öffnung für die Registerplatte nicht miteinander verschweißt sind.

8. Vorrichtung nach Anspruch 1, dadurch gekennzeichnet, daß das Frontseiten- und/oder das Rückseitenteil der Kunststoff-Hülle mit einem Hängeschienen-Durchlaßteil (75, 138) in Form eines Saums in der Nähe der Öffnung für die Registerplatte versehen ist.

9. Vorrichtung nach Anspruch 8, dadurch gekennzeichnet, daß die Seitenkante entweder des Frontseiten- oder des Rückseitenteils der Kunststoff-Hülle bei der Öffnung für die Registerplatte über die Seitenkante des anderen Flachteils übersteht und daß die überstehende Seitenkante aus der Öffnung für die Registerplatte heraus nach außen und nach unten gedoppelt und mit der Frontseiten- oder mit dem Rückseitenteil gesiegelt ist, so daß sich ein Hängeschienen-Durchlaßteil ergibt.

10. Vorrichtung nach Anspruch 9, dadurch gekennzeichnet, daß das Hängeschienen-Durchlaßteil außen an der Kunststoff-Hülle angebracht ist, sich aber in einer vertikalen Position der Kunststoff-Hülle nicht oberhalb der Öffnung für die Registerplatte erstreckt, wenn die Öffnung für die Registerplatte nach oben zeigt.

11. Vorrichtung nach Anspruch 9, dadurch gekennzeichnet, daß das Hängeschienen-Durchlaßteil außen an der Kunststoff-Hülle angebracht ist, und sich in einer vertikalen Position der Kunststoff-Hülle oberhalb der Öffnung für die Registerplatte erstreckt, wenn die Öffnung für die Registerplatte nach oben zeigt.

12. Vorrichtung nach Anspruch 8, dadurch gekennzeichnet, daß ein separates Kunststoff-Blatt mit seinen Enden an eines der Flachteile der Kunststoff-Hülle in der Nähe der Einstrecköffnung befestigt ist und ein Hängeschienen-Durchlaßteil bildet.

13. Vorrichtung nach Anspruch 8, dadurch gekennzeichnet, daß das Hängeschienen-Durchlaßteil nur in einem Zentrum einer der Seitenkanten der Kunststoff-Hülle vorgesehen ist, die mit der Öffnung für die Registerplatte versehen ist.

14. Vorrichtung nach Anspruch 8, dadurch gekennzeichnet, daß das Hängeschienen-Durchlaßteil an jedem Ende derjenigen Seitenkante der Kunststoff-Hülle vorgesehen ist, die mit der Öffnung für die Registerplatte versehen ist.

15. Vorrichtung nach Anspruch 1, dadurch gekennzeichnet, daß wenigstens das Frontseitenteil oder das Rückseitenteil der Kunststoff-Hülle mit einer gitterartigen Überdeckung (137) geformt ist, deren Gitterstreifen breiter sind als die Entfernungen zwischen den Dias (29), die mit Dia-Rahmen in dem Registerblatt aufbewahrt sind, jedoch schmaler als die Bildbereiche (29a) der Dias.

16. Vorrichtung nach Anspruch 15, dadurch gekennzeichnet, daß ein rahmenartig ausgebildeter Schutzbereich (137a) in den außenliegenden Bereichen der Kunststoffhülle vorgesehen ist.

## Revendications

1. Un dispositif de rangement et d'entreposage de films de diapositives, comportant une feuille de dossier rectangulaire (21, 60) formée avec une pluralité de creux d'entreposage de films (24, 62) régulièrement disposés et une pochette plastique en forme de sachet (22, 70, 131) composé d'un élément de surface avant (32, 71) recouvrant une surface avant de ladite feuille de dossier et d'un élément de surface arrière (33, 72) recouvrant une surface arrière de ladite feuille de dossier, lesdits éléments de surface avant et arrière formant une ouverture d'insertion (31, 70a) de la feuille de dossier sur un bord latéral de ladite pochette plastique en forme de sachet, caractérisé en ce que la pochette plastique présente une largeur (W) à l'ouverture d'insertion de la feuille de dossier un peu plus large que la longueur de soit le côté long (L), soit le côté court (W1) de ladite feuille de dossier, mais sensiblement égale à ladite longueur au bord latéral opposé à ladite ouverture d'insertion de la feuille de dossier.

2. Un dispositif suivant la revendication 1, dans lequel ladite feuille de dossier est formée avec une pluralité d'ouvertures de liaison (22, 67) sur un bord latéral de la feuille et ladite pochette plastique est formée avec des entailles (34, 73a) dans son bord latéral correspondant au bord latéral formé avec les ouvertures de liaison de la feuille de dossier, entailles qui s'étendent d'une ligne recouvrant sensiblement au moins lesdites ouvertures de liaison à un bord de la pochette plastique, et avec des parties d'encliquetage de la feuille de dossier (35, 74) circonscrivant la feuille de dossier et dont au moins une partie est connectée à la pochette plastique.

3. Un dispositif suivant la revendication 1, dans lequel les bords latéraux opposés de ladite pochette plastique autres que les bords latéraux opposés dont l'un est formé avec l'ouverture d'insertion de la feuille de dossier sont sensiblement droits, mais en oblique vers l'extérieur vers le bord latéral formé avec l'ouverture d'insertion.

4. Un dispositif suivant la revendication 1, dans lequel les bords latéraux opposés de ladite pochette plastique autres que les bords latéraux opposés dont l'un est formé avec l'ouverture d'insertion de la feuille de dossier sont recourbés vers l'intérieur.

5. Un dispositif suivant la revendication 1, dans lequel les bords latéraux opposés de ladite pochette plastique autres que les bords latéraux opposés dont l'un est formé avec l'ouverture d'insertion de la feuille de dossier sont recourbés vers l'extérieur.

6. Un dispositif suivant la revendication 1, dans lequel un bord latéral de l'élément de surface arrière de la pochette plastique s'étend légèrement au-delà d'un bord latéral de l'élément de surface avant à l'ouverture d'insertion de la feuille de dossier.

7. Un dispositif suivant la revendication 1, dans lequel les éléments de surface avant et arrière de la pochette plastique ne sont soudés l'un à l'autre que sur une certaine distance sur au moins un bord latéral adjacent à l'ouverture d'insertion de la feuille de dossier.

8. Un dispositif suivant la revendication 1, dans lequel au moins l'un desdits éléments de surface avant et arrière de la pochette plastique est pourvu d'une partie de passage de barre d'accrochage (75, 138) se présentant sous forme d'un manchon à proximité de ladite ouverture d'insertion de la feuille de dossier.

9. Un dispositif suivant la revendication 8, dans lequel le bord latéral de l'un des éléments de surface avant et arrière de la pochette plastique à l'ouverture d'insertion de la feuille de dossier s'étend au-delà du bord latéral de l'autre élément de surface et le bord latéral prolongé est replié vers l'extérieur et vers le bas en dehors de l'ouverture d'insertion de la feuille de dossier et soudé audit un des éléments de surface avant et arrière pour former une partie de passage de barre d'accrochage.

10. Un dispositif suivant la revendication 9, dans lequel ladite partie de passage de barre d'accrochage est disposée à l'extérieur de la pochette plastique, mais non prolongée vers le haut par rapport à l'ouverture d'insertion de la feuille de dossier, dans une position de la pochette plastique avec l'ouverture d'insertion de la feuille de dossier orientée vers le haut.

11. Un dispositif suivant la revendication 9, dans lequel ladite partie de passage de barre d'accrochage est disposée à l'extérieur de la pochette plastique, mais prolongée vers le haut par rapport à l'ouverture d'insertion de la feuille de dossier, dans une position de la pochette plastique avec l'ouverture d'insertion de la feuille de dossier orientée vers le haut.

12. Un dispositif suivant la revendication 9, dans lequel une feuille plastique séparée est fixée par ses extrémités à l'un des éléments de surface de la pochette plastique près de l'ouverture d'insertion pour former la partie de passage de barre d'accrochage.

13. Un dispositif suivant la revendication 8, dans lequel ladite partie de passage de barre d'accrochage n'est prévue qu'au centre de l'un des bords latéraux de la pochette plastique pourvue de l'ouverture d'insertion de la feuille de dossier.

14. Un dispositif suivant la revendication 8, dans lequel ladite partie de passage de barre d'accrochage est prévue à chaque extrémité de l'un des bords latéraux de la pochette plastique pourvue de l'ouverture d'insertion de la feuille de dossier.

15. Un dispositif suivant la revendication 1, dans lequel au moins l'un des éléments de surface avant et arrière de la pochette plastique est formé avec un grillage de protection (137) dont les bandes présentent des largeurs supérieures aux distances entre les films de diapositives (29) avec encadrements entreposés dans la feuille de dossier, mais inférieures aux distances entre les zones d'image (29a) des films de diapositives.

16. Un dispositif suivant la revendication 15, dans lequel une partie d'écran en forme de cadre (137a) est prévue dans les parties périphériques de la pochette plastique.
